# EUROPÄISCHE PATENTSCHRIFT

(11) **EP 1 144 232 B1**
(45) Veröffentlichungstag und Bekanntmachung des Hinweises auf die Patenterteilung: **24.05.2006**
(21) Anmeldenummer: 99966967.4
(22) Anmeldetag: 15.12.1999
(51) Int. Cl.: B60S 1/08, G01N 21/47

(54) **Verfahren zum Detektieren und Lokalisieren von auf einer lichtdurchlässigen Scheibe befindlichen diffus reflektierenden Belägen sowie zugehörige Vorrichtung**
Method for detecting and localizing diffuse-reflecting coatings situated on a translucent pane
Procédé et dispositif pour détecter et localiser des couches a réflexion diffuse se trouvant sur une vitre translucide

(30) Priorität: 17.12.1998 DE 19858316
(43) Veröffentlichungstag der Anmeldung: 17.10.2001
(73) Patentinhaber: Leopold Kostal GmbH & Co. KG, 58769 Lüdenscheid (DE)
(72) Erfinder: BLÄSING, Frank, D-59457 Werl (DE)
(86) Internationale Anmeldenummer: PCT/EP1999/009944
(87) Internationale Veröffentlichungsnummer: WO 2000/035725

(56) Entgegenhaltungen:
- WO-A-97/29926
- US-A- 4 867 561

## Beschreibung

Die Erfindung hat ein Verfahren zur Erkennung des Vorhandenseins und der relativen Lage diffusreflektierender Beläge, wie z.B. Beschlag durch Feuchtigkeit auf Oberflächen transparenter Medien sowie eine Vorrichtung zur Durchführung des Verfahrens zum Gegenstand.
Angewandt z.B. bei der Windschutzscheibe eines Kraftfahrzeugs kann ein solches Verfahren als eine zentrale Funktion eines Systems zur Sichtqualitätsbestimmung angesehen werden.
Die bisher bekannten, zu diesem Zweck eingesetzten Verfahren basieren in erster Linie auf Sensoren, welche einen Feuchtigkeitsbeschlag der Oberfläche mit Hilfe kapazitiver oder resistiver Wirkprinzipien detektieren und um das gleiche Beschlagsverhalten zu erzielen wie die zu überwachende Oberfläche an diese thermisch gekoppelt werden müssen.

So ist z.B. durch die DE 44 28 111 A1 eine Schaltungsanordnung zur Messung der Feuchte auf einer Scheibe eines Kraftfahrzeugs offenbart, bei der der Widerstand zwischen auf der Scheibe angeordneten und mit dieser in thermischem Kontakt befindlichen Elektroden gemessen wird.

Eine Detektion anderer Beläge als solcher die durch Feuchtigkeit hervorgerufen sind sowie die Detektion von Belägen auf der dem Sensor gegenüberliegenden Oberfläche kann mit Verfahren dieser vorbekannten Art nicht realisiert werden.

Darüberhinaus sind durch die gattungsgemässe US-Patentschrift No. 4,867,561 eine Vorrichtung sowie ein Verfahren zur Erkennung des Vorhandenseins und der relativen Lage von Belägen auf einer lichtdurchlässigen Scheibe bekannt geworden. Dabei wird ein optisches Sensorarray mit dem Licht mehrerer Lichtquellen beaufschlagt, wobei diese Lichtquellen in zwei Reihen angeordnet sind, um das an den verschiedenen Grenzflächen der Scheibe reflektierte Licht gleichermaßen auf dem Sensorarray fokussieren zu können. Das Vorhandensein von Belägen wird anhand der Intensitäten der von den verschiedenen Lichtquellen hervorgerufenenen Lichtreflexe beurteilt, wobei zur Normierung der absoluten intensitäten ein Bereich des Sensorarrays herangezogen wird, dem keine Lichtquellen zugeordnet sind.
Durch die Mehrzahl der bei dieser Vorgehensweise eingesetzten Lichtquellen werden aber sowohl die Vorrichtung als auch das Verfahren sehr aufwendig. So ist bei den Lichtquellen nicht nur der durch ihre Anzahl bedingte, reine Bauteileaufwand erheblich, sondern es müssen zur Durchführbarkeit des auf Intensitätwerten beruhenden Verfahrens auch solche Lichtquellen ausgewählt werden, welche bei gleicher Bestromung eine annähernd gleich Lichtstärke hervorrufen. Andernfalls müßte das Verfahren einen Ausgleich der unterschiedlichen Lichtstärken durch individuell angepaßte Bestromung der einzelnen Lichtquellen vorsehen.

Ausgehend von diesem Stand der Technik liegt der vorliegenden Erfindung die Aufgabe zugrunde, eine Vorrichtung sowie ein Verfahren vorzuschlagen, mit welchen es möglich ist, beliebige, diffusreflektierende Beläge berührungslos zu detektieren und zu lokalisieren und dabei trotz geringeren Aufwandes die oben angesprochenen Probleme zu vermeiden.

Erfindungsgemäß wird die verfahrensbezogene Aufgabe durch ein Verfahren zum Detektieren und Lokalisieren von auf einer lichtdurchlässigen Scheibe befindlichen, diffusreflektierenden Belägen unter Verwendung einer ein optisches Sensorarray enthaltenden Aufnahmeeinheit gelöst, welches Verfahren die im 1. Patentanspruch beschriebenen Verfahrensschritte umfaßt.

Die vorrichtungsbezogene Aufgabe wird durch die entsprechende Vorrichtung mit den im kennzeichnenden Teil des 7. Patentanspruchs genannten Merkmalen gelöst.

Weitere besonders günstige Ausgestaltungen des erfindungsgemäßen Gegenstands sind in den Unteransprüchen angegeben und werden anhand des in der Zeichnung dargestellten Ausführungsbeispiels näher erläutert.

Dabei zeigt:
- **Fig. 1**: eine schematische Darstellung einer erfindungsgemäßen Vorrichtung zur Illustration der Verhältnisse bei einer beidseitig trockenen und sauberen Scheibe
- **Fig. 2**: eine schematische Darstellung einer erfindungsgemäßen Vorrichtung zur Illustration der Verhältnisse bei Vorhandensein eines Belags auf der - sensorabgewandten - Scheibenaußenseite
- **Fig. 3**: eine schematische Darstellung einer erfindungsgemäßen Vorrichtung zur Illustration der Verhältnisse bei Vorhandensein eines Belags auf der - sensorzugewandten - Scheibeninnenseite

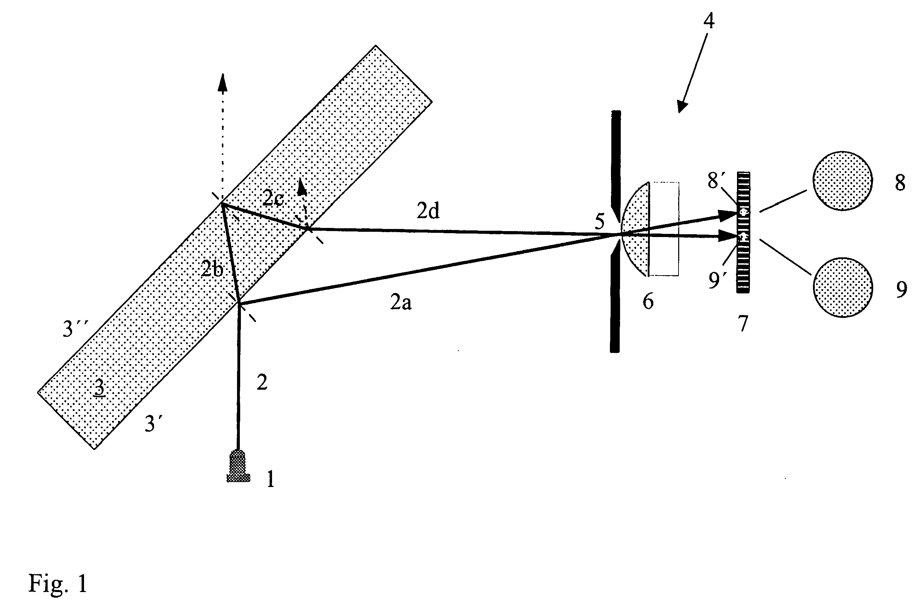

Wie aus Fig. 1 hervorgeht, wird ein erster Anteil 2a der Strahlung 2, welche von einer Lichtquelle 1 emittiert wird, an der der Aufnahmeeinheit 4 zugewandten, im folgenden auch als Scheibeninnenseite bezeichneten Oberfläche 3' der Scheibe 3 reflektiert. Durch diesen ersten Anteil 2a der Strahlung entsteht durch die eine Blende 5 sowie eine Sammellinse 6 umfassende Abbildungsoptik ein erstes Bild 8 der Lichtquelle 1 am Ort 8' in der Ebene des Sensorarrays 7.
Ein zweiter Anteil 2b der Strahlung wird an der Oberfläche 3' gebrochen und dringt in die Scheibe 3 ein. An der gegenüberliegenden, im folgenden auch als Scheibenaußenseite bezeichneten Oberfläche 3" der Scheibe 3 wird ein Teil 2c dieser Strahlung reflektiert, wovon wiederum ein Teil 2d nach erneuter Brechung an der ersten Oberfläche 3' zur Aufnahmeeinheit 4 gelangt und dort ein zweites Bild 9 der Lichtquelle 1 am Ort 9' in der Ebene des Sensorarrays 7 erzeugt.

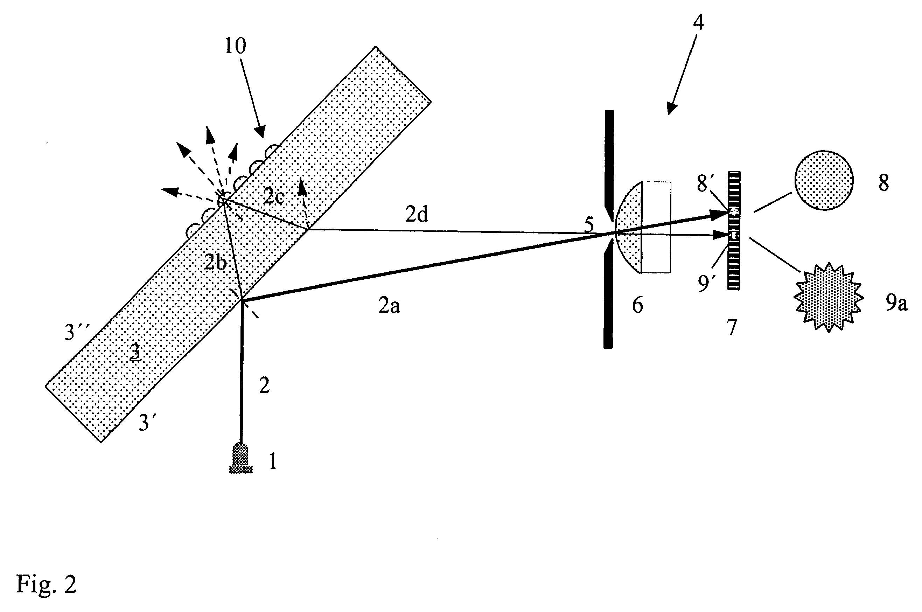

Bei einer Situation, wie sie in Fig. 2 dargestellt ist, mit einem Belag 10 auf der Scheibenaußenseite 3" erhält man dagegen nur ein scharfes Abbild 8 der Lichtquelle 1 am Ort 8', das durch den an der Scheibeninnenseite 3' reflektierten Anteil 2a der Strahlung 2 entsteht. An der Scheibenaußenseite 3" wird die in die Scheibe eingedrungene Strahlung 2b dagegen diffus zurückgestreut bzw. verstärkt in den Aussenraum ausgekoppelt. Der Anteil 2d' der diffus zurückgestreuten Strahlung 2c', der nach erneuter Brechung an der Oberfläche 3' noch zur Aufnahmeeinheit 4 gelangt, vermag allerdings keine scharfe Abbildung der Lichtquelle 1 am Ort 9' mehr zu erzeugen, sondern vielmehr nur noch einen verwaschenen Lichtfleck 9a, der anhand des Intensitätsverlaufs an seinen Rändern, d.h. insbesondere anhand der Flankensteilheit dieses Verlaufs eindeutig von der scharfen Abbildung 9 der in der Fig. 1 dargestellten Situation zu unterscheiden ist.

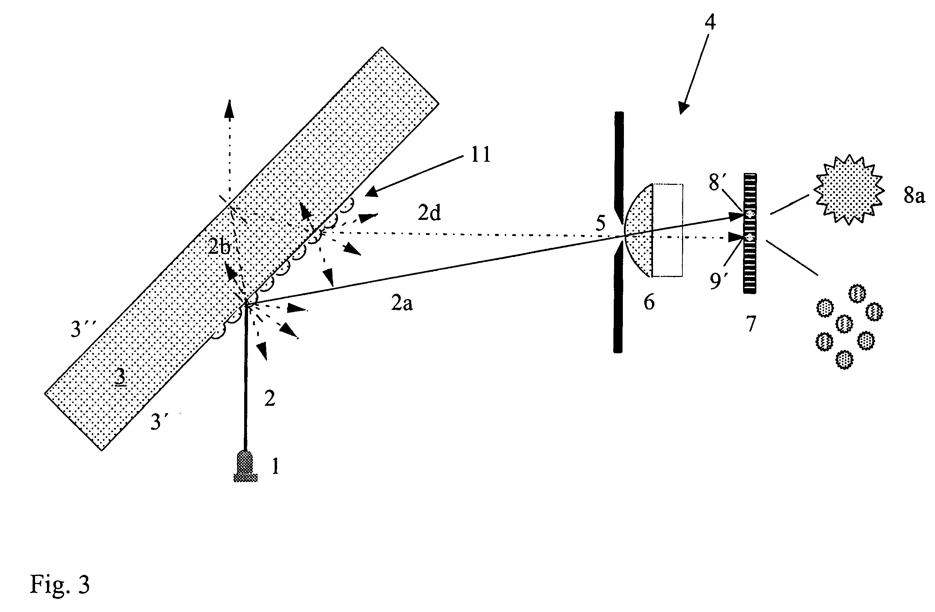

Ähnlich verhält es sich bei der in Fig. 3 dargestellten Situation eines Belags 11 auf der Scheibeninnenseite 3', wobei hier allerdings schon an dieser Oberfläche 3' eine diffuse Streuung der Strahlung 2 stattfindet. Der von der Scheibeninnenseite 3' zur Aufnahmeeinheit 4 gelangende Anteil 2a' der Strahlung erzeugt dort bereits keine scharfe Abbildung der Lichtquelle 1 am Ort 8' mehr, sondern nur einen verwaschenen Lichtfleck 8a, der ebenso, wie zuvor für den Lichtfleck 9a in der in Fig. 2 dargestellten Situation beschrieben, anhand der Flankensteilheit seines Intensitätsverlaufs von der scharfen Abbildung 8 der in der Fig. 1 dargestellten Situation zu unterscheiden ist. Der Anteil 2d' der Strahlung 2, der nach Reflexion an der Scheibenaußenseite 3" und abermaliger diffuser Streuung an Scheibeninnenseite 3' noch zur Aufnahmeeinheit 4 gelangt, hat so viel von seiner ursprüglichen Intensität und Richtcharakteristik verloren, daß in der Ebene des Sensorarrays 7 nicht einmal mehr ein zusammenhängender, am Ort 9' lokalisierbarer Bildfleck entsteht.

Das erfindungsgemäße Verfahren zur Bewertung des Belagzustandes einer Scheibe (3) wertet die von dem Sensorarray (7) aktuell ermittelten Intensitätsverläufe aus, wobei es diese mit den an den bekannten Orten (8',9') auf diesem erwarteten Intensitätsverläufe, welche als Referenz für den belagfreien Zustand abgespeichert wurden, vergleicht und anhand der Abweichungen von der Referenz, insbesondere im Hinblick auf Veränderungen in der Flankensteilheit, auf die zuvor beschriebenen Belagzustände schließt.

Beim Einsatz des vorgestellten Verfahrens sowie der Vorrichtung in einem Kraftfahrzeug kann so eine nachgeschaltete Aktorsteuerung anhand des vorherrschenden Belagzustandes auf der Scheibe verschiedene Aktionen auslösen wie z.B. die Beeinflussung der Klimaanlage zur Entfernung von Feuchtigkeitsbeschlag auf der Scheibeninnenseite und/oder der Scheibenwischer zur Entfernung von Feuchtigkeit auf der Scheibenaußenseite.

## Patentansprüche

1. Verfahren zum Detektieren und Lokalisieren von auf einer lichtdurchlässigen Scheibe (3) befindlichen, diffusreflektierenden Belägen (10, 11) unter Verwendung einer ein optisches Sensorarray (7) enthaltenden Aufnahmeeinheit (4), umfassend folgende Schritte:
- bildliches Erfassen eines Objekts (1) mit der Aufnahmeeinheit (4), wobei sich das Objekt (1) auf derjenigen Scheibenseite (3') befindet, hinter der die Aufnahmeeinheit (4) angeordnet ist, und wobei die von dem Objekt (1) ausgehende Lichtstrahlung (2) zwischen diesem und der Aufnahmeeinheit (4) eine und/oder mehrere Umlenkung(en) an den Oberflächen (3',3") der lichtdurchlässigen Scheibe (3) erfährt
- fortlaufendes Ermitteln der Intensitätsverläufe an denjenigen Orten (8',9') des Sensorarrays (7), an denen sich bei einer sauberen Scheibe (3) gemäß der geometrischen Optik die Bilder (8,9) des Objekts befinden müssten
- Auswerten der fortlaufend ermittelten Intensitätsverläufe in einer Datenverarbeitungseinheit, beinhaltend ein Vergleichen mit in einem Datenspeicher abgelegten, zuvor bei einer sauberen Scheibe (3) ermittelten Referenzwerten der Intensitätsverläufe.

2. Verfahren nach Anspruch 1, **dadurch gekennzeichnet, daß** die Auswertung der Intensitätsverläufe Informationen über das Vorhandensein von Belägen (11) auf der der Aufnahmeeinheit (4) zugewandten Oberfläche (3') der Scheibe (3) und/oder Belägen (10) auf der von der Aufnahmeeinheit (4) abgewandten Oberfläche (3") der Scheibe (3) liefert.

3. Verfahren nach Anspruch 1 oder 2, **dadurch gekennzeichnet, daß** insbesondere die Flankensteilheit der Intensitätsverläufe zur Auswertung herangezogen wird.

4. Verfahren nach einem der Ansprüche 1 bis 3, **dadurch gekennzeichnet, daß** entsprechend der durch die ermittelten Intensitätsverläufe repräsentierten Belagzustände eine Beeinflussung von Aktorfunktionen erfolgt.

5. Verfahren nach Anspruch 4, **dadurch gekennzeichnet, daß** die Aktorfunktionen den Betrieb einer Klimaanlage betreffen.

6. Verfahren nach Anspruch 4, **dadurch gekennzeichnet, daß** die Aktorfunktionen den Betrieb einer der Scheibe (3) zugeordneten Scheibenwischeranlage betreffen.

7. Vorrichtung zum Detektieren und Lokalisieren von auf einer lichtdurchlässigen Scheibe (3) befindlichen, diffusreflektierenden Belägen (10, 11), umfassend eine ein optisches Sensorarray (7) enthaltende Aufnahmeeinheit (4) sowie ein von dieser optisch zu erfassendes Objekt (1), welches sich auf derjenigen Scheibenseite (3') befindet, hinter der die Aufnahmeeinheit (4) angeordnet ist, **dadurch gekennzeichnet, daß** das Objekt (1) bezüglich der Aufnahmeeinheit (4) und der Scheibe (3) so angeordnet ist, daß ein durch Reflexion an der der Aufnahmeeinheit (4) zugewandten Oberfläche (3') der Scheibe (3) entstehendes erstes Bild (8) und ein durch Reflexion an der von der Aufnahmeeinheit (4) abgewandten Oberfläche (3") der Scheibe (3) entstehendes zweites Bild (9) an unterschiedlichen, festgelegten Orten (8',9') in der Ebene des Sensorarrays (7) entstehen.

8. Vorrichtung nach Anspruch 7, **dadurch gekennzeichnet, daß** das Objekt (1) eine für die Auswertung der Intensitätsverläufe vorteilhafte Kontur aufweist.

9. Vorrichtung nach Anspruch 7 oder 8, **dadurch gekennzeichnet, daß** das Objekt (1) eine selbstleuchtende Lichtquelle ist.

10. Vorrichtung nach Anspruch 9, **dadurch gekennzeichnet, daß** die Lichtquelle (1) eine sichtbares und/oder infrarotes Licht abstrahlende Leuchtdiode ist.

## Claims

1. Procedure for detecting and localising diffusely reflecting deposits (10, 11) on a transparent screen (3) using a recording unit (4) comprising an optical sensor array (7), encompassing the following steps:
- Graphical acquisition of an object (1) with the recording unit (4), for which the object (1) is positioned on that side of the screen (3') behind which the recording unit (4) is arranged and for which the light radiation emitted by the object (1) is subjected, between the same and the recording unit (4), to one and/or more deflection(s) on the surfaces (3', 3") of the transparent screen (3),
- Continuous detection of the intensity gradients at those locations (8', 9') of the sensor array (7) at which the images (8, 9) of the object ought to be located in accordance with the geometric optics if the screen (3) is clean
- Evaluation of the continuously detected intensity gradients in a data processing unit, consisting of a comparison with reference values of the intensity gradients previously determined with a clean screen (3) that have been filed in a data memory.

2. Procedure in accordance with Claim 1, **characterised by** the fact that the evaluation of the intensity gradients provides information on the presence of deposits (11) on the surface (3') of the screen (3) facing the recording unit (4) and/or deposits (10) on the surface (3") of the screen (3) facing away from the recording unit (4).

3. Procedure in accordance with Claim 1 or Claim 2, **characterised by** the fact that in particular the edge steepness of the intensity gradients is brought into play for evaluation purposes.

4. Procedure in accordance with any of Claims 1 to 3, **characterised by** the fact that an influencing of actuator functions takes place in conformance with the deposit states represented by the detected intensity gradients.

5. Procedure in accordance with Claim 4, **characterised by** the fact that the actuator functions relate to the operation of an air conditioning system.

6. Procedure in accordance with Claim 4, **characterised by** the fact that the actuator functions relate to the operation of a windscreen wiper system arranged on the screen (3).

7. Facility for the detection and localisation of diffusely reflecting deposits (10, 11) on a transparent screen (3), made up of a recording unit (4) consisting of an optical sensor array (7) and an object (1) to be optically acquired by the same that is positioned on that side of the screen (3') behind which the recording unit (4) is arranged, **characterised by** the fact that the object (1) is arranged in such a way in relation to the recording unit (4) and the screen (3) that a first image (8) developing as a result of reflection on the one surface (3') of the screen (3) facing the recording unit (4) and a second image (9) developing on the surface (3") of the screen (3) facing away from the recording unit (4) come into being at different fixed positions (8', 9') in the level of the sensor array (7).

8. Facility in accordance with Claim 7, **characterised by** the fact that the object (1) shows a contour which is advantageous for the evaluation of the intensity gradients.

9. Facility in accordance with Claim 7 or Claim 8, **characterised by** the fact that the object (1) is a self-luminous light source.

10. Facility in accordance with Claim 9, **characterised by** the fact that the light source (1) is a light-emitting diode radiating a visible and/or infra-red light.

## Revendications

1. Procédé pour la détection et la localisation de dépôts à réflexion diffuse (10, 11) se trouvant sur une vitre transparente (3), en utilisant une l'unité de détection (4) contenant un réseau de détection optique (7), lequel procédé comprend les étapes suivantes :
- Formation de l'image d'un objet (1) au moyen de l'unité de détection (4), l'objet (1) se trouvant sur la face (3') de la vitre derrière laquelle est disposé l'unité de détection (4), et le faisceau lumineux (2) émanant de l'objet (1) subissant, entre celui-ci et l'unité de détection (4) une ou plusieurs déflections sur les surfaces (3', 3") de la vitre transparente (3),
- détermination en continu du profil de l'intensité aux endroits (8', 9') du réseau de détection optique (7) auxquels les images (8, 9) de l'objet devraient se trouver sur une vitre (3) propre,
- Evaluation des profils d'intensité captés en continu dans une unité de traitement de données comportant une comparaison avec des valeurs de référence des profils d'intensité, déterminées auparavant sur une vitre (3) propre et enregistrées dans une mémoire de données.

2. Procédé selon la revendication 1, **caractérisé en ce que** l'évaluation des profils d'intensité fournit des informations sur la présence d'une couche (11) déposée sur la surface (3') de la vitre (3) dirigée vers l'unité de détection (4), et / ou de couches (10) déposées sur la surface (3") de la vitre (3) détournée de l'unité de détection (4).

3. Procédé selon la revendication 1 ou 2, **caractérisé en ce que** la pente des flancs des profils d'intensité est particulièrement prise en compte lors de l'évaluation.

4. Procédé selon l'une des revendications 1 à 3, **caractérisé en ce que**, conformément aux états de la couche déposée, représentés par les profils d'intensité captés, une activation se produit.

5. Procédé selon la revendication 4, **caractérisé en ce que** les actionnements concernent le fonctionnement d'une installation de conditionnement d'air.

6. Procédé selon la revendication 4, **caractérisé en ce que** les actionnements concernent le fonctionnement d'un système d'essuie-glace associé à la vitre (3).

7. Dispositif pour la détection et la localisation de couches (10, 11) déposées sur une vitre (3), lequel comprend une unité de détection (4) avec un réseau de détection optique (7), ainsi que d'un objet (1) qui, devant être détecté optiquement par celle-ci, se trouve sur la surface (3') de la vitre derrière laquelle l'unité de détection (4) est disposée, **caractérisé en ce que** l'objet (1) est disposé par rapport à l'unité de détection (4) et à la vitre (3) de telle manière qu'une première image (8) générée par réflexion sur la surface (3') de la vitre (3), dirigée vers l'unité de détection (4), et une deuxième image (9) générée par réflexion sur la surface (3") de la vitre (3), détournée de l'unité de détection (4), apparaissent à différents endroits (8', 9') définis, dans le plan du réseau de détection optique (7).

8. Dispositif selon la revendication 7, **caractérisé en ce que** l'objet (1) présente un contour avantageux pour l'évaluation des profils d'intensité.

9. Dispositif selon la revendication 7 ou 8, **caractérisé en ce que** l'objet (1) est une source de lumière luminescente.

10. Dispositif selon la revendication 9, **caractérisé en ce que** la source de lumière (1) est une diode électroluminescente émettant une lumière visible et / ou infrarouge.
